(19) Europäisches Patentamt
European Patent Office
Office européen des brevets

(11) **EP 2 392 865 A2**

(12) **EUROPÄISCHE PATENTANMELDUNG**

(43) Veröffentlichungstag:
07.12.2011 Patentblatt 2011/49

(51) Int Cl.:
*F24D 11/00* *(2006.01)* *F24D 19/10* *(2006.01)*

(21) Anmeldenummer: **11168936.0**

(22) Anmeldetag: **07.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.06.2010 DE 102010022838**

(71) Anmelder: **PAW GmbH & Co. KG**
**31789 Hameln (DE)**

(72) Erfinder:
• **Böhning, Holger**
 **31860 Emmertal (DE)**
• **Vehmeier, Jörg**
 **32791 Lage (DE)**

(74) Vertreter: **Jabbusch, Matthias**
**Jabbusch Siekmann & Wasiljeff**
**Patentanwälte**
**Roscherstrasse 12**
**30161 Hannover (DE)**

(54) **Verfahren zum Betreiben zumindest einer solarthermischen Anlage und solarthermische Anlage**

(57) Bei einem Verfahren zum Betreiben zumindest einer solarthermischen Anlage, die wenigstens einen Speicher für ein zu erwärmendes Nutzmedium aufweist, wobei ein Wärme transportierendes Medium in einem Primärkreis und das Nutzmedium in einem Sekundärkreis und durch zumindest eine Wärmetauschereinrichtung geführt werden und wobei die Temperaturen der Medien in beiden Kreisen gemessen werden, ist vorgesehen, dass im Primärkreis und im Sekundärkreis zusätzlich der tatsächliche Volumenstrom der Medien gemessen wird, dass erhaltene Temperatur- und Volumenstromwerte in eine Regeleinrichtung eingegeben werden und dass in den Primär- und in den Sekundärkreis eingesetzte Medienförderorgane von der Regeleinrichtung beaufschlagt werden.

Eine Vorrichtung zum Durchführen des Verfahrens zeichnet sich dadurch aus, dass in den Primärkreis und in den Sekundärkreis Volumenstrommesser und Mediumförderorgane eingesetzt sind und dass die Volumenstrommesser und die Mediumförderorgane mit einer Regeleinrichtung verschaltet sind.

Fig. 1

**Beschreibung**

Die Erfindung betrifft ein Verfahren zum Betreiben zumindest einer solarthermischen Anlage, die wenigstens einen Speicher für ein zu erwärmendes Nutzmedium aufweist, wobei ein Wärme transportierendes Medium in einem Primärkreis und das Nutzmedium in einem Sekundärkreis und durch zumindest eine Wärmetauschereinrichtung geführt werden und wobei die Temperaturen der Medien in beiden Kreisen gemessen werden.

Die Erfindung betrifft weiterhin eine solarthermische Anlage mit wenigstens einem Speicher für ein zu erwärmendes Nutzmedium und mit einer in den Primärkreis für das wärmetransportierende Medium sowie in den Sekundärkreis für das zu erwärmende Nutzmedium eingesetzten Wärmetauschereinrichtung sowie mit in beide Kreise eingesetzten Temperatursensoren.

Solarthermische Anlagen werden zum Erwärmen von in einem Sekundärkreis angeordneten Medien eingesetzt. Die Wärmeübertragung des im Primärkreis geführten Mediums auf das Nutzmedium erfolgt durch ein Aneinandervorbeiführen beider Medien in einer Wärmetauschereinrichtung. Das Nutzmedium wird durch das die Wärme transportierende Medium erwärmt, es kann anschließend beispielsweise für Heizungszwecke verwendet werden.

In beiden Kreisen sind nach dem Stand der Technik Temperatursensoren angeordnet. Mit diesen können die Temperaturen der Medien in den Kreisen festgestellt werden, je nach Differenz der festgestellten Temperaturen werden die Medien in den Kreisen schneller oder langsamer transportiert. In die Kreise sind dazu Medienförderorgane eingesetzt, mit denen ein Transport der Medien in den Kreisen erfolgt. Nach dem Stand der Technik werden beispielsweise Drehzahlen von als Pumpen ausgebildeten Medienförderorganen erhöht oder erniedrigt. Derartige Drehzahlerhöhungen bzw. -erniedrigungen wirken sich jedoch erst verzögert auf die in den Kreisen vorhandenen Temperaturen aus.

Solarthermische Anlagen können mit mehreren Speichern in Wirkverbindung stehen. Wenn bei bekannten Anlagen zu entscheiden ist, welcher Speicher mit im Wärmetauscher erwärmten Nutzmedien zu beladen ist, wird bei bekannten Verfahren zum Betreiben einer solarthermischen Anlage die Temperatur in den Kreisen gemessen. Die Medienförderorgane werden abgeschaltet und es wird der Temperaturanstieg in den Kreisen über einen bestimmten Zeitraum beobachtet. Erst nach einer Analyse dieses Anstieges wird ein Speicher angewählt oder es beginnt eine neue Wartezeit. Dadurch ergeben sich nachteilig Totzeiten, welche Verfahrensabläufe verzögern.

Der Erfindung liegt die Aufgabe zu Grunde, ein Verfahren der eingangs genannten Gattung aufzuzeigen, mit dem ein effizienter Betrieb einer solarthermischen Anlage ermöglicht ist. Weiterhin soll eine entsprechende solarthermische Anlage aufgezeigt werden.

Diese Aufgabe ist verfahrensseitig erfindungsgemäß dadurch gelöst, dass im Primärkreis und im Sekundärkreis zusätzlich der tatsächliche Volumenstrom der Medien gemessen wird, das erhaltene Temperatur- und Volumenstromwerte in eine Regelung eingegeben werden und dass in den Primär- und in den Sekundärkreis eingesetzte Medienförderorgane von der Regeleinrichtung beaufschlagt werden.

Bei dem erfindungsgemäßen Verfahren wird nicht lediglich ein Messen der Temperaturen vorgenommen, zusätzlich werden die tatsächlich in den Kreisen auftretenden Volumenströme bzw. Masseströme gemessen. Eine solarthermische Anlage wird nach der Gleichung

$$\dot{Q} = \Delta T \bullet C_p \bullet \dot{m}$$

betrieben. $\dot{Q}$ stellt die Leistung bzw. den Wärmestrom dar, $\Delta T$ die Temperaturdifferenz, $C_p$ die spezifische Wärmekapazität der Medien, eine Kostante, und $\dot{m}$ den Massestrom bzw. Volumenstrom. Die Leistung ist allein aus der Beeinflussung der Temperaturdifferenz nicht sicher bestimmbar, wenn aber auch der Volumenstrom $\dot{m}$ bekannt ist, kann die Leistung eingestellt werden.

Nach dem erfindungsgemäßen Verfahren ist somit eine Messung und Berechnung der zu erwartenden thermischen Leistung möglich. Werden mehrere Speicher bedient, kann direkt und verlustfrei zum jeweils optimalen Speicher umgeschaltet werden.

Die Volumenströme werden in beiden Kreisen und somit auf beiden Seiten der Wärmetauschereinrichtung gemessen. Die Messung kann dabei in der Wärmetauschereinrichtung zugeordneten Bereichen erfolgen, Volumenströme können aber auch im Bereich der zu beladenen Speicher gemessen werden.

Mit dem erfindungsgemäßen Verfahren ist es ohne Totzeiten möglich, in voneinander verschiedenen Speichern für Nutzmedien voneinander verschiedene Medientemperaturen einzustellen. Beispielsweise kann erster Speicher für ein heißes Medium z. B. für Duschzwecke vorgesehen sein, hier ist eine Temperatur von etwa 60˚C vorzuhalten. Dieser Speicher wird nach dem erfindungsgemäßen Verfahren nur dann beladen, wenn das Medium im Sekundärkreis ≥60˚C ist. Ein zweiter Speicher kann für ein Beladen mit einem Medium vorgesehen sein, wenn dieses Medium eine um beispielsweise 10 k höhere Temperatur hat als das im Speicher bereits angeordnete Medium. Diesem Speicher entnommene Medien können z. B. für eine Fußbodenheizung verwendet werden. Dem Speicher zugeordnete Ventile werden dabei von der Regelung beaufschlagt.

Zur weiteren Ausbildung des Verfahrens ist noch vorsehbar, dass die Medienförderorgane unabhängig voneinander von der Regeleinrichtung beaufschlagt werden. Die Medienförderorgane sind dadurch nicht stets in gleicher Weise zu betreiben, vielmehr kann ein asynchroner Betrieb ermöglicht werden. Die Drehzahl eines beispielsweise als Pumpe ausgebildetes Medienförderorgans wird von der Regeleinrichtung nicht lediglich nach der Temperatur bemessen, sondern nach dem gemessenen Volumenstrom. Änderungen des Volumenstromes können schnell durchgeführt werden. Dadurch treten auch Änderungen bei der Leistung ein. Lange Totzeiten sind nicht erforderlich.

Die vorrichtungsseitige Lösung der Aufgabe, für die selbstständiger Schutz beansprucht wird, ist dadurch gekennzeichnet, dass in den Primärkreis sowie in den Sekundärkreis Volumenstrommesser und Medienförderorgane eingesetzt sind und dass die Volumenstrommesser und die Mediumförderorgane mit einer Regeleinrichtung verschaltet sind.

Mit den in die Kreise eingesetzten Volumenstrommessern werden die Volumenströme bzw. Massenströme gemessen. Die Mediumförderorgane, beispielsweise ausgebildet als hocheffiziente Pumpen, fördern die in den Kreisen befindlichen Medien mit höherer oder niedrigerer Geschwindigkeit, je nachdem, wie die Regeleinrichtung es vorgibt.

Da aufgrund der Bekanntheit der geometrischen Verhältnisse der Kreise die in den Kreisen vorhandene Volumen der Medien etwa bekannt sind, kann aus einem gemessenen Volumenstrom bestimmt werden, wann eine Änderung beispielsweise des Volumenstroms sich auf sämtliches Medium in dem Kreis auswirkt. Totzeiten treten nicht auf, die Pumpen sind nicht still zu setzen.

Nach einer Weiterbildung der erfindungsgemäßen Vorrichtung kann der Anlage ein Fernbedienungsmodul zugeordnet sein. Dieses Fernbedienungsmodul kann drahtgebundene oder drahtlose Übertragungsstrecken einschließen, mit denen eine Fernbedienung möglich ist. Der Regeleinrichtung kann auch ein Überwachungsmodul zugeordnet sein, das mit den Volumenstrommessern verschaltet ist. Tatsächlich in den Kreisen auftretende Volumenströme werden fortlaufend überwacht und bei Unterschreiten eines kritischen Grenzwertes wird ein Alarm ausgelöst. Bei einer ersten Inbetriebnahme kann eine Pumpe mit 100%, 90%, 80% und weiteren Prozentstufen betrieben werden und dabei auftretende Volumenströme gemessen und in eine Wertetabelle eingestellt werden. Tritt dann ein niedriger Volumenstrom auf, muss ein Fehler vorliegen und es wird eine entsprechende Warnmeldung ausgegeben.

Den Speichern für Nutzmedien zugeordnete Ventile sind schließlich gleichfalls mit der Regeleinrichtung verschaltbar. So kann das Zuführen von neuen Medien bzw. das Abführen von Medien aus den Speichern überwacht werden, mit dem Ziel, beispielsweise in einem Speicher eine gute Schichtung von Mediumlagen mit unterschiedlichen Temperaturen herzustellen.

Ausführungsbeispiele der Erfindung aus denen sich weitere erfinderische Merkmale ergeben, sind in der Zeichnung dargestellt. Es zeigen:

Fig. 1: eine schematische Ansicht einer solarthermischen Anlage mit zwei Speichern, und

Fig. 2: eine schematische Ansicht einer solarthermischen Anlage mit drei Speichern.

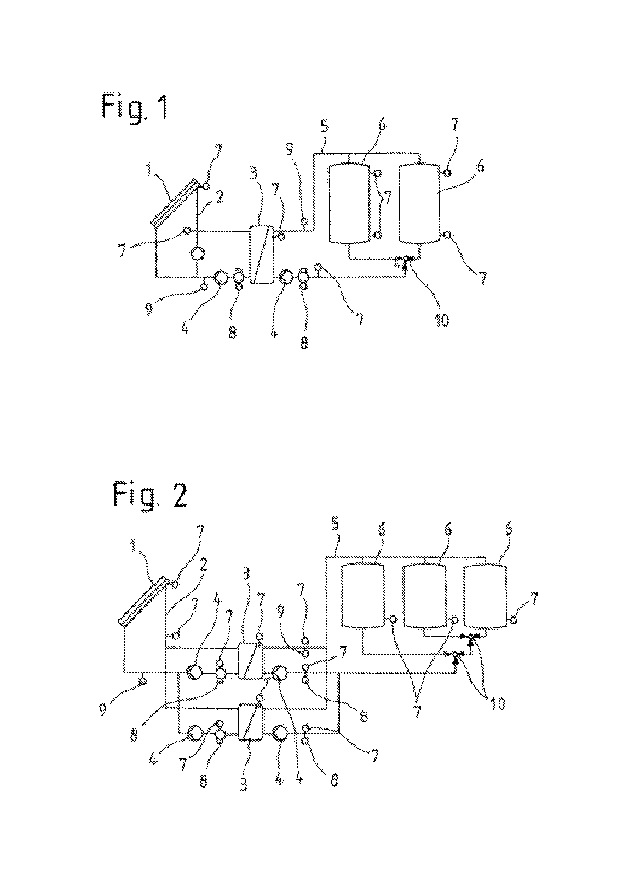

Die solarthermische Anlage in Fig. 1 weist einen Kollektor 1 auf. Dieser ist eingebunden in einen Primärkreis für ein Wärme transportierendes Medium, beispielsweise ein Wasserglykolgemisch, das in diesem Primärkreis 2 zu einer Wärmetauschereinrichtung 3 geführt wird. Auf dem Rücklauf des Primärkreises 2 von der Wärmetauschereinrichtung 3 zum Kollektor 1 ist in den Primärkreis 2 eine Pumpe 4 eingesetzt.

Ein Sekundärkreis 5 wird gleichfalls durch die Wärmetauschereinrichtung 3 geführt. Über den Sekundärkreis 5 können zwei Speicher 6 mit einem erwärmten Medium beladen werden. Im Rücklauf des Sekundärkreises 5 zur Wärmetauschereinrichtung 3 ist eine Pumpe 4 eingesetzt.

An verschiedenen Abschnitten im Primärkreis 2 sowie im Sekundärkreis 5 sind Temperatursensoren 7 angeordnet. In beiden Kreisen 2 und 5 sind nach der Erfindung zudem Volumenstrommesser 8 angeordnet. Mit diesen können die in den Kreisen 2, 5 auftretende Volumenströme direkt gemessen werden. Darüber hinaus sind noch Drucksensoren 9 vorgesehen. Die Volumenstrommesser 8 sowie die weiteren Sensoren 7, 9 sowie die Pumpen 4 sind mit einer nicht weiter dargestellten Regelung verschaltet. Diese Regelung kann auch den Speichern 6 zugeordnete Ventile 10 beaufschlagen.

Bei der Ausführung nach Fig. 2 ist die Anzahl der Speicher 6 auf drei erhöht. Um diese Speicher 6 mit erwärmten Medien zu beladen, sind zwei Wärmetauschereinrichtungen 3 vorgesehen. Beide Wärmetauschereinrichtungen 3 werden von einem Primärkreis 2 beaufschlagt, in diesen sind wieder Volumenstrommesser 8 eingesetzt. Auch auf der Sekundärseite sind im Sekundärkreis 5 Volumenstrommesser 8 angeordnet. Gleiche Bauteile sind im Übrigen mit gleichen Bezugszahlen gekennzeichnet.

**Patentansprüche**

1. Verfahren zum Betreiben zumindest einer solarthermischen Anlage, die wenigstens einen Speicher für ein zu erwärmendes Nutzmedium aufweist, wobei ein Wärme transportierendes Medium in einem Primärkreis und das Nutzmedium in einem Sekundärkreis und durch zumindest eine Wärmetauschereinrichtung geführt werden und wobei die Temperaturen der Medien in beiden Kreisen gemessen werden, **dadurch gekennzeichnet, dass** im Primärkreis (2) und im Sekundärkreis (5) zusätzlich der tatsächliche Volumenstrom der Medien gemessen wird, dass erhaltene Temperatur- und Volumenstromwerte in eine Regeleinrichtung eingegeben werden und dass in den Primär- und in den Sekundärkreis (2, 5) eingesetzte Medienförderorgane von der Regeleinrichtung beaufschlagt werden.

2. Verfahren nach Anspruch 1, **dadurch gekennzeichnet, dass** die Volumenströme in einem der Wärmetauschereinrichtung (3) zugeordneten Bereich gemessen werden.

3. Verfahren nach Anspruch 1 oder 2, **dadurch gekennzeichnet, dass** in voneinander verschiedenen Speichern (6) für Nutzmedien voneinander verschiedene Medientemperaturen eingestellt werden.

4. Verfahren nach Anspruch 3, **dadurch gekennzeichnet, dass** dem Speicher (6) zugeordnete Ventile (10) von der Regelung beaufschlagt werden.

5. Verfahren nach einem der vorhergehenden Ansprüche, **dadurch gekennzeichnet, dass** die Medienförderorgane unabhängig voneinander von der Regeleinheit beaufschlagt werden.

6. Solarthermische Anlage mit wenigstens einem Speicher für ein zu erwärmendes Nutzmedium und mit einer in den Primärkreis für das Wärme transportierende Medium sowie in den Sekundärkreis für das zu erwärmende Nutzmedium eingesetzten Wärmetauschereinrichtung sowie mit in beide Kreise eingesetzten Temperatursensoren,
**dadurch gekennzeichnet,**
**dass** in den Primärkreis (2) und in den Sekundärkreis (5) Volumenstrommesser (8) und Mediumförderorgane eingesetzt sind und dass die Volumenstrommesser (8) und die Mediumförderorgane mit einer Regeleinrichtung verschaltet sind.

7. Anlage nach Anspruch 6, **dadurch gekennzeichnet, dass** die Mediumförderorgane hoch effiziente Pumpen (4) sind.

8. Anlage nach Anspruch 6 oder 7, **dadurch gekennzeichnet, dass** der Regeleinrichtung ein Fernbedienungsmodul zugeordnet ist.

9. Anlage nach einem der Ansprüche 6 bis 8, **dadurch gekennzeichnet, dass** den Speichern (6) für Nutzmedien zugeordnete Ventile (10) mit der Regeleinrichtung verschaltet sind.

10. Anlage nach einem der Ansprüche 6 bis 9, **dadurch gekennzeichnet, dass** der Regeleinrichtung ein Überwachungsmodul zugeordnet ist, das mit dem Volumenstrommesser (8) verschaltet ist.

Fig. 1

Fig. 2